# EUROPÄISCHE PATENTANMELDUNG

(11) **EP 2 237 338 A1**
(43) Veröffentlichungstag der Anmeldung: **06.10.2010**
(21) Anmeldenummer: 09157257.8
(22) Anmeldetag: 03.04.2009
(51) Int. Cl.: H01L 41/09

(54) **Piezo-Antrieb**

(71) Anmelder: Leica Geosystems AG, 9435 Heerbrugg (CH)
(72) Erfinder: Thelen, Marc, 76133 Karlsruhe (DE); Iseli, Claudio, 9436 Balgach (CH); Bernhard, Heinz, 9442 Berneck (CH)
(74) Vertreter: Kaminski Harmann

(57) **Zusammenfassung**

Ein Piezo-Antrieb, insbesondere zur Verwendung in geodätischen Geräten, weist wenigstens einen eine Vorschubkomponente aufweisenden piezoelektrischen Motorelement (2), eine Laufflächenkomponente (10C) und eine Aufnahme für die Laufflächenkomponente (10C) zur Verbindung mit einer anzutreibenden Komponente auf, wobei das piezoelektrische Motorelement (2) ein Motorbetriebsfenster als Frequenzbereich der Bewegung der Vorschubkomponente besitzt. Die Laufflächenkomponente (10C) und die Aufnahme (9C) sind so dimensioniert und miteinander verbunden, dass die Eigenresonanzen der Laufflächenkomponente (10c) ausserhalb des Motorbetriebsfensters liegen.

## Beschreibung

Die Erfindung betrifft ein Piezo-Antrieb, insbesondere zur Verwendung in geodätischen oder Koordinatenmessgeräten, nach dem Oberbegriff des Anspruchs 1.

In vielen präzisen Geräten, wie z.B. geodätischen Messgeräten, ist die Bewegung von Komponenten oder des gesamten Gerätes erforderlich. Dabei muss die Bewegung präzise und bei dynamischen Anwendungen auch hinreichend schnell erfolgen, wobei meist hohe Anfahr- bzw. Wiederholgenauigkeiten Voraussetzung sind. Zudem erfordert die Feldtauglichkeit von Geräten grundsätzlich Robustheit des Antriebs, einen geringen Stromverbrauch sowie einen zuverlässigen Betrieb innerhalb eines weiten Temperaturbereiches.

Beispiele für solche Messgeräte sind Theodoliten oder Tachymeter, welche - auch zusammen mit integrierten automatischen Zielerfassungs- und Zielverfolgungseinrichtungen - für vielfältige Vermessungsaufgaben zum Einsatz kommen, wobei sowohl eine Datengewinnung als auch eine reine Überprüfung, wie z.B. in der Bauwerksüberwachung, in Frage kommen. Andere Messgeräte sind beispielsweise Scannersysteme, die im abtastenden Verfahren Topographien von Oberflächen als dreidimensionale Punktwolken aufnehmen oder Messmaschinen, z.B. Koordinatenmessmaschinen zur hochgenauen kontaktierenden oder berührungslosen Oberflächenvermessung.

In bisher aus dem Stand der Technik bekannten Lösungen kommen für diese Zwecke Piezosysteme zum Einsatz, die den Antrieb zum Schwenken oder Verschieben der Komponenten bereitstellen. Solche Mikromotoren weisen räumlich wirkende Piezoschwinger mit Kontaktelementen als Antriebselemente auf, die auf eine entsprechend gestaltete Lauffläche oder Reibschiene wirken und somit in Abstimmung von Piezoschwinger und abgestimmter Lauffläche eine optimierte Bewegung erlauben. Die räumlich schwingende bzw. oszillierende Bewegung wird durch die abgestimmte Anordnung und Verschaltung von piezoelektrischen Materialen bewirkt, deren auf die Lauffläche wirkendes Kontaktelement durch eine geeignete Ansteuerung zu einer vortreibenden, z.B. ellipsenförmigen Bewegung veranlasst wird.

In einem Antrieb für Messgeräte können solche schwingend betriebenen piezoelektrischen Systeme als Mikromotoren für verschiedenste Bewegungen verwendet werden, wenn eine entsprechend auf die Erfordernisse des geodätischen Messgerätes abgestimmte Auslegung von Laufflächen vorhanden ist. Zumeist erfordern Messgeräte sowohl einen schnellen Bewegungsmodus mit hoher Geschwindigkeit als auch einen Modus zur hochgenauen Positionierung mit geringsten Geschwindigkeiten.

So ist beispielsweise aus der WO 2006/008318 ein geodätisches Messgerät mit einem solchen Antriebskonzept bekannt. Dieses Messgerät weist eine Halterung zur Positionierung des Messgeräts und einer Messkomponente mit einem optischen Strahlengang zur Vermessung eines Zieles auf, wobei die Messkomponente in einer gegenüber der Halterung bewegbaren Ausrichtkomponente gelagert und gegenüber der Ausrichtkomponente bewegbar ist. Der optische Strahlgang wird durch wenigstens einen Piezoantrieb als Kombination aus Vortriebskomponente mit einem vorschiebenden Kontaktelement und einer mit der zu verstellenden Komponente verbundenen Lauffläche modifiziert.

Dabei erfolgt eine grundsätzlich lineare Bewegung durch Interaktion von Kontaktelement und Lauffläche, wobei durch das unter Druck die Lauffläche kontaktierende Kontaktelement ein Vorschub bewirkt wird. Durch diese Kupplung wird eine vorantreibende Kraft übertragen, die durch die spielfreie Bewegung eine direkte Positionierung erlaubt. Durch eine geeignete Gestaltung der Lauffläche kann der lineare Vorschub auch in rotierende bzw. drehende Bewegungen umgewandelt werden.

Solche Linear- oder Drehantriebe mit in Resonanz betriebenen Piezo-Ultraschallmotoren sind heute Stand der Technik, wobei handelsübliche Antriebe Resonanzfrequenzen im Bereich von 50 - 200 KHz aufweisen. Durch das oszillierende Verhalten können jedoch im Zusammenwirken mit einer entsprechenden Laufflächengeometrie Probleme entstehen. Bei endlichen Laufflächen mit freien Enden, die zudem schwimmend und gedämpft gelagert werden, kommt es nicht zur Entstehung von stehenden Wellen, die den Motor beeinflussen können. Anders ist dies bei drehenden Antrieben, die ringförmige Lauffläche aufweisen oder bei schwingungsfähigen Laufflächengeometrien mit fixierten Enden, wobei die nachteiligen Einflüsse noch durch ungenügende oder fehlende Dämpfung vergrössert werden können.

Bei drehenden Antriebskonfigurationen kommt als Laufflächenkomponente meist ein Ring aus hartem Material zur Verwendung, so dass der Abrieb verringert wird. Allerdings muss zur Erzielung einer guten Vortriebswirkung gleichzeitig eine hohe Reibung bewirkt werden. Gängige Materialien sind hierbei Metalle mit einer Hartschicht oder Keramikbauteile. Für hochpräzise Bewegungen und Ausrichtungen von Komponenten besteht das Erfordernis einer genauen Zentrierung der Lauffläche zum Drehzentrum, d.h. typischerweise mit einer Abweichung zwischen 0.01 und 0.3mm, so dass ein gleichmässiges Laufverhalten gewährleistet wird. Dabei sollen der Ring und die Ringaufhängung ihre Eigenschaften über Temperatur nicht oder nur in gewissen Grenzen ändern. Als typische Umweltbedingungen im geodätischen Instrumentenbau gelten dabei Betriebstemperaturen von -20 bis +60°C, Lagertemperaturen von -40 bis 80°C und Feuchtigkeiten von 0-95% rel. Luftfeuchtigkeit über den Temperaturbereich.

Hohe Anforderungen resultieren insbesondere daraus, dass das Keramikbauteil mit der Aufhängung stabil, genau und unveränderlich über Zeit und Umweltbedingungen verbunden werden muss. Probleme entstehen jedoch dadurch, dass die zwei Bauteile - Aufhängung und Ring - ein unterschiedliches Wärmeausdehnungsverhalten aufweisen. Zudem haben Keramikringe nur eine schwache und statistisch stark streuende Zugfestigkeit, wobei sie jedoch Vorteile in der Druckfestigkeit besitzen. Durch die Wechselwirkung des Piezoschwingers mit der Laufflächenkomponente kann es ausserdem zu Leistungsverlusten und Geräuschentwicklung bzw. Vibrationen kommen, wobei hier eine Abhängigkeit von der Geometrie der Laufflächenkomponente besteht.

Eine Aufgabe der vorliegenden Erfindung besteht darin, einen verbesserten Piezo-Antrieb, insbesondere für hochpräzise Geräte, wie bspw. geodätische Instrumente, bereitzustellen.

Eine weitere Aufgabe besteht in der Reduzierung von unerwünschten Vibrationen und Geräuschentwicklung bei Piezo-Antrieben.

Eine weitere Aufgabe besteht in der Erhöhung der Leistung bzw. der Verringerung von Leistungsverlusten bei Piezo-Antrieben.

Diese Aufgaben werden durch die Gegenstände des Anspruchs 1 oder der abhängigen Ansprüche gelöst bzw. die Lösungen weitergebildet.

Der Erfindung liegt die Erkenntnis zugrunde, dass die auftretenden Probleme in starkem Masse durch die Dynamik der Antriebskomponente als wechselwirkendes System von vortreibendem Piezoschwinger und von diesem kontaktierter Lauffläche beeinflußt werden. Insbesondere die Anregung von Eigenschwingungen der Laufflächenkomponente führt zum Auftreten von Leistungsverlusten und zur Geräuschentwicklung. Dabei haben sich als entscheidende Grössen die Geometrien von Laufflächenkomponente und deren Aufnahme, wie auch die Ausgestaltung der Verbindung dieser beiden Teile herausgestellt.

Erfindungsgemäss werden nun die Komponenten und ihre Verbindung so ausgelegt, dass gegebenenfalls störende Resonanzen in Laufflächenkomponente und deren Aufnahme so gelegt bzw. verschoben werden, dass diese ausserhalb der Frequenzen im Betriebsfenster des Piezoschwinger bzw. piezoelektrischen Antriebes insgesamt zu liegen kommen. Die Abstände der Laufflächen-Eigenresonanzen sollen möglichst weit auseinander liegen und von möglichst tiefer Ordnung sein. Dabei wird angestrebt, dies für sämtliche Betriebszustände und über alle Umweltbedingungen zu gewährleisten.

Grundlage hierfür ist die optimierte Beeinflussung des Schwingungsverhaltens durch mechanische Entkopplung und Dämpfung für die Laufflächenkomponente und deren Aufnahme.

Hierzu erfolgt die Verbindung von Laufflächenkomponente und Aufnahme bevorzugt durch wenigstens eine Zwischenlage, z.B. in Form einer Verklebung, die Entkopplungs- und/oder Dämpfungseigenschaften aufweist, wobei erfindungsgemäss insbesondere die Gestaltung einer Klebeverbindung mit elastischem Charakter zur Optimierung des Antriebsverhaltens genutzt wird. Neben der Wahl des geeigneten Klebemittels werden insbesondere Klebspalt- und Laufflächengeometrie aufeinander abgestimmt und ggf. durch Hinzufügen von Füllstoffen die Verklebung so optimiert, dass die Resonanzen nicht im Betriebsfenster zu liegen kommen. Damit das System einfach berechenbar bleibt, sollen die Eigenfrequenzen der Laufflächenkomponente durch die Klebung möglichst wenig beeinflusst und die Frequenzen möglichst wenig übertragen werden. Dies wird durch einen möglichst weichen Kleber, z.B. Shore-A-Härte ca. 30, erreicht. Da die Festigkeit des Klebemittels die Eigenresonanzen der geklebten Laufflächenkomponente beeinflusst, können diese durch Zumischung von Füllstoffen angepasst werden. Die Klebspaltdicke, Klebspaltbreite und die Füllstoffmenge und Art werden hierbei so gewählt, dass die Eigenfrequenzen des Systems sich nicht mit der Resonanzfrequenz des Motors überlagern.

Dabei können die Systemkomponenten während des Verklebevorgangs präzise zueinander justiert werden. Die Laufflächenkomponente als schwingungsfähiges System wird auch neben seinen Eigenfrequenzen durch den piezoelektrischen Motor angeregt. Wenn diese Schwingungsamplituden der Laufflächenkomponente zu gross werden, kann dies den Wirkungsgrad der Motoren wesentlich verringern oder zu erheblichem Lärm führen. Um dies zu verhindern sollte die Ringamplitude gedämpft werden, was durch Hinterkleben oder Hinterlegen mit einem ebenfalls weichen Kleber erreicht werden kann.

Es stellte sich zudem heraus, dass eine zusätzliche Dämpfungslage oder Dämpfungswirkung der Zwischenlage auch den Temperaturbereich vergrössert, innerhalb dessen die Störungen bzw. Leistungsverluste verringert werden können. Dabei ist die erforderliche Dämpfung und ihre konkrete Charakteristik sowohl abhängig von der Übertragungsenergie des Motors - welche man nicht reduzieren möchte - wie auch der Dämpfung durch die Systemkomponenten selbst.

Der erfindungsgemässe Piezo-Antrieb wird nachfolgend anhand von in der Zeichnung schematisch dargestellten Ausführungsbeispielen rein beispielhaft näher beschrieben oder erläutert. Im einzelnen zeigen
- Fig.1: die schematische Darstellung eines drehenden Antriebs durch piezoelektrische Mikromotoren;
- Fig.2a-b: die figürliche und die schematische Darstellung eines Theodoliten als erstes Beispiel für den Einsatz eines erfindungsgemässen Piezo-Antriebes;
- Fig.3: die schematische Darstellung des Grundprinzips eines drehenden Piezo-Antriebs;
- Fig.4: die schematische Darstellung einer ersten Ausführungsform eines Piezo-Antriebs des Stands der Technik;
- Fig.5: die schematische Darstellung einer zweiten Ausführungsform eines Piezo-Antriebs des Stands der Technik;
- Fig.6: die schematische Darstellung von Systemkomponenten eines erfindungsgemässen Piezo-Antriebs;
- Fig.7: die schematische Darstellung des dem erfindungsgemässen Piezo-Antrieb zugrunde ligenden Prinzips;
- Fig.8: die schematische Darstellung einer ersten Ausführungsform des erfindungsgemässen piezo-Antriebs für Drehbewegungen;
- Fig.9a: die schematische Darstellung einer ersten Ausführungsform des erfindungsgemässen piezo-Antriebs für Drehbewegungen;
- Fig.10a-c: die schematische Darstellung einer dritten, vierten und fünften Ausführungsform des erfindungsgemässen piezo-Antriebs für Linearbewegungen;
- Fig.11: die schematische Darstellung einer sechsten Ausführungsform des erfindungsgemässen Piezo-Antriebs für Drehbewegungen mit einer Klemmverbindung und
- Fig.12: die schematische Darstellung einer siebten Ausführungsform des erfindungsgemässen Piezo-Antriebs für Drehbewegungen mit einer Schrumpfverbindung.

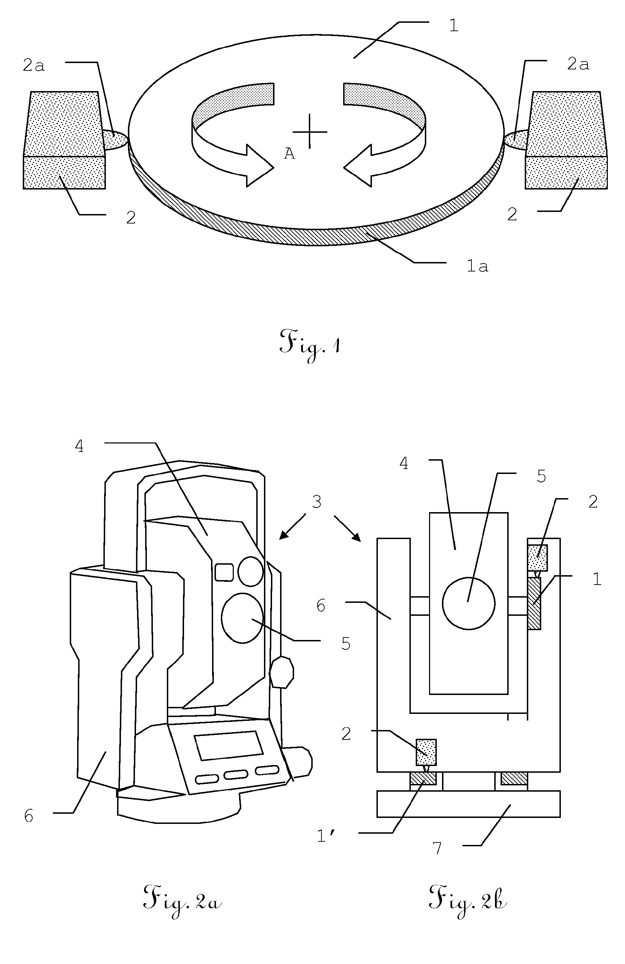

Fig.1 zeigt die schematische Darstellung eines Piezo-Antriebs mit einem anzutreibenden Rotor 1, der eine Lauffläche 1a aufweist, welche durch ein bewegungsübertragendes Kontaktelement 2a eines Piezomotors 2 kontaktiert wird. Die Lauffläche 1a als bewegungsaufnehmendes Element wandelt die Bewegung des Kontaktelementes 2a in die gewünschte Bewegung um, in diesem Beispiel eine Drehung des Rotors 1 um eine Achse A.

Die Bewegung wird hierbei durch eine Kombination von Resonanzen der piezokeramischen Elemente des Piezo-Motors erzeugt, die eine oszillierende Bewegung des Kontaktelementes 2a hervorrufen. Diese Bewegung wird durch Reibung auf die Lauffläche 1a und damit den anzutreibenden Rotor 1 übertragen.

Der Antrieb kann hierbei sowohl durch einen einzigen Piezomotor 2 als auch durch eine Mehrzahl von solchen Antriebselementen bewirkt werden. In Fig.1 werden rein beispielhaft zwei Piezomotoren 2 in gleichwirkender Anordnung dargestellt. In diesem Beispiel treiben zwei Piezomotoren 2 als Endlostrieb den Rotor 1 mit einer kreisförmigen Keramikoberfläche als Lauffläche 1a an. Durch die Drehung eines solchen Elementes kann beispielsweise der optische Strahlgang einer Meßkomponente beweg- und feststellbar ausgebildet werden.

Fig.2a-b die figürliche und die schematische Darstellung eines Theodoliten als Beispiel für den Einsatz eines erfindungsgemässen Piezo-Antriebes. In Fig.2a ist eine Totalstation als geodätisches Messgerät 3 mit einer Ausrichtkomponente 6 und einer Messkomponente 4 dargestellt. Die Messkomponente 4 weist ein Objektiv 5 auf, über das ein Strahlgang zu einem zu vermessenden Ziel definiert wird. Die Ausrichtkomponente 6 kann gegenüber einer hier nicht dargestellten Halterung um eine vertikale Stehachse geschwenkt werden. Durch die Lagerung der Messkomponente 4 in der Ausrichtkomponente 6 kann die Messkomponente 4 um eine horizontale Kippachse bewegt werden. Die Bewegbarkeit um Steh- und Kippachse erlaubt das Erfassen eines grossen Raumwinkelbereichs, der bei einer Auslegung mit einer durchschlagbaren Messkomponente 4 eine vollständige Erfassung des umgebenden Raumes erlaubt.

Für das gleiche Messgerät 3 erfolgt in Fig.2b eine schematische und vereinfachte Darstellung. Die Messkomponente 4 mit dem Objektiv 5 ist durch eine Achse gegenüber der Ausrichtkomponente 6 drehbar gelagert. Die Achse als anzutreibender Komponente weist einen Rotor 1 mit gekrümmter Lauffläche auf, dem ein Piezo-Motor als Antrieb zugeordnet ist, wobei dieser die Lauffläche radial, d.h. an seiner Aussenfläche, kontaktiert und eine Drehung um die Kippachse bewirkt.

Die Emission von Strahlung zur Vermessung des Ziels kann über das Objektiv 5 oder aber über einen zusätzlichen, zur optischen Achse des Objektivs parallelen Strahlgang erfolgen, der eine Laserstrahlung emittierende Entfernungsmesseinheit und einen zugeordneten Spiegel aufweist, so dass durch die Bewegung der Messkomponente 4 eine Abtastung der Umgebung erfolgen kann. Eine Drehung der Ausrichtkomponente 6 um die Stehachse erfolgt durch einen zweiten Piezo-Motor 2 als Ausrichtmotor, der eine in der Halterung 7 angeordnete ringförmige Lauffläche 1' axial bzw. stirnseitig kontaktiert. Durch diesen Ausrichtmotor kann die Ausrichtkomponente 6 gegenüber der Halterung 7 verdreht werden, wobei die Anordnung als Endlostrieb wirkt. Durch das Zusammenwirken der beiden Piezo-Motoren ist der Strahlgang um zwei Achsen beweg- und ausrichtbar und somit modifizierbar. Die axial oder stirnseitige Kontaktierung bzw. die entsprechende Auslegung der Antriebskomponenten ist hierbei nicht auf die dargestellten Achsen beschränkt, sondern kann auch für die jeweils andere Achse oder andere Achsen zur Anwendung kommen.

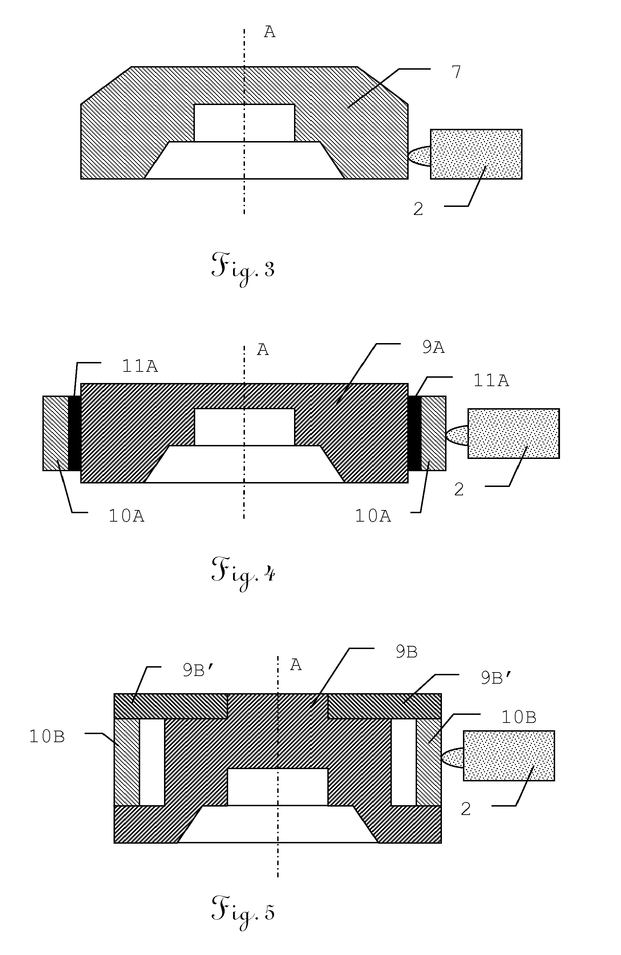

Das Grundprinzip eines drehenden Piezo-Antriebs wird in Fig.3 anhand eines Querschnitts durch einen Rotor 7 verdeutlicht. In diesem Beispiel ist der Rotor 7 monolithisch aus Keramik ausgeführt und wird durch den Piezo-Motor an seiner Aussenfläche radial kontaktiert, so dass durch den Vorschub eine Drehung um die Achse A erfolgt. Aus dem Stand der Technik sind jedoch auch zusammengesetzte Antriebselemente bekannt, wie sie in den Fig.4 und 5 dargestellt werden.

Fig.4 zeigt hierbei die schematische Darstellung einer ersten Ausführungsform eines Piezo-Antriebs des Stands der Technik mit einem auf dem Umfang eines Trägerrotors als Aufnahme 9A aufgeklebten Keramikring als Laufflächenkomponente 10A. Zwischen Laufflächenkomponente 10A und Aufnahme 9A ist dabei eine Zwischenlage als Klebemittelschicht 11A ausgebildet, wobei die Klebemittelschicht im ausgehärteten Zustand zu einer fixen, nicht elastischen Verbindung führt. Dabei stellt der Keramikring bzw. das Gesamtsystem aus Keramikring und Aufnahme 9A ein schwingungsfähiges System dar, dessen Eigenfrequenzen durch den Piezo-Motor 2 angeregt werden und die mit der Resonanzfrequenz des Piezo-Motors 2 interferieren können. Diese Beeinflussung des Piezo-Motors 2 durch die Eigenresonanzen der Laufflächenkomponente 10A kann zu einem vollständigen Ausfall des Motors bzw. dessen vorschiebender Wirkung führen, wenn sich die beiden Resonanzen gegenseitig negativ beeinflussen. Dies ist beispielsweise der Fall, wenn sich Biegeschwingungen und oszillierende Vortriebsbewegungen gegenphasig verhalten, d.h. während der Vorschubbewegung des Kontaktelementes biegt sich die Oberfläche des Keramikringes 10A an der Kontaktstelle nach innen und damit weg vom Kontaktelement, so dass der Reibungsschluss verringert oder gänzlich aufgehoben wird.

Zusätzliche Resonanzen neben der reinen Anregungsfrequenz können bei unzureichender Dämpfung im Antriebselement 2 der Laufflächenkomponente 10A oder in der Aufnahme 9A angeregt werden. Durch ungünstige Überlagerung dieser Frequenzen, können auch andere Bauteile die mit der Laufflächenkomponente 10A oder anderen Komponenten mechanisch verbunden sind in hörbaren Frequenzen schwingen und Lärm verursachen, der je nach Frequenz einen Einsatz des Antriebes für den Benutzer und in bewohntem Gebiet verunmöglichen kann.

Erschwerend kommt hinzu, dass sich die Eigenresonanzen des Ringsystems über die Temperatur verschieben können, was bedeutet, dass die Lärmerzeugung Temperaturabhängigkeit zeigt. Zudem besitzt diese Ausgestaltung nach dem Stand der Technik den Nachteil, dass die unterschiedliche Wärmeausdehnung von Laufflächenkomponente 10A und Aufnahme 9A nicht durch die Klebemittelschicht 11A ausgeglichen werden kann, da diese nahezu inkompressibel ist und enorme Druckkräfte in dieser Schicht. Aufgrund der Temperaturabhängigkeit dieser Spannungen ist das Schwingungsverhalten ebenfalls temperaturabhängig, so dass starke thermisch bedingte Resonanzverschiebungen die Folge sind.

Ein weiteres Qualitätsmerkmal eines Piezo-Antriebes ist der Gleichlauf, d.h. das Ausmass von Rundlaufschwankungen. Je nach Bauart des Piezo-Motors ist der Rundlauf des Keramikringes eine hierfür entscheidende Voraussetzung. Eine Justierbarkeit des Keramikringes im Zuge des Assemblierungsvorgangs ist hierbei von Vorteil.

Eine alternative Verbindung von Laufflächenkomponente und Aufnahme zeigt Fig.5 in schematische Darstellung. Hier wird der Keramikring als Laufflächenkomponente 10B mechanisch durch einen Klemmring 9B' gegenüber der Aufnahme 9A fixiert, wobei eine parallele Verklebung möglich ist. Diese Ausgestaltung weist hinsichtlich der Temperaturabhängigkeit bzw. Wärmedehnung ähnliche Nachteile wie das in Fig.4 dargestellte Beispiel und verfügt über keine Dämpfungswirkung.

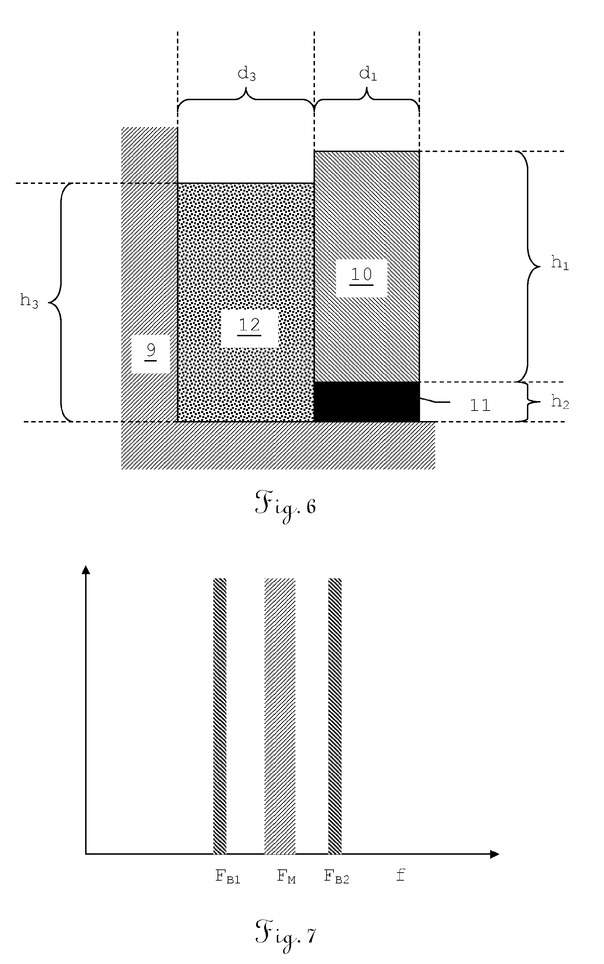

Fig.6 zeigt die schematische Darstellung von Systemkomponenten eines erfindungsgemässen Piezo-Antriebs.

Die Laufflächenkomponente 10 mit einer Dicke h₁ und einer Breite d₁ wird mit der Aufnahme 9 durch eine erste als Klebemittelschicht 11 der Dicke h₂ ausgebildete Zwischenlage verbunden. Ergänzend kann eine als Dämpfungslage 12 mit der Dicke d₃ und der Breite h₃ ausgebildete weitere Zwischenlage zwischen Laufflächenkomponente 10 und der Aufnahme 9 eingebracht werden. In dieser Anordnung sind Klebemittelschicht 11 und Dämpfungslage 12 an zwei unterschiedlichen Flächen der Laufflächenkomponente 10 angeordnet. Grundsätzlich können aber auch beide Schichten oder Zwischenlagen in anderer Anordnung angebracht werden, z.B. an der gleichen Seite angeordnet sein. Auch kann die Funktionalität beider Schichten in eine einzige Schicht integriert werden, z.B. indem der Klebemittelschicht 11 Füllstoffe beigemischt werden, die bspw. sowohl als Abstandhalter als auch zur Erhöhung der inneren Reibung dienen und eine gezielte Versteifung der Zwischenlage bewirken können.

Fig.7 erläutert die schematische Darstellung des dem erfindungsgemässen Piezo-Antrieb zugrunde liegenden Prinzips. Dargestellt sind das Frequenzband des Piezo-Motors als Motorbetriebsfenster F_{M} und zwei beispielhafte Frequenzbänder der Eigenresonanzen der Laufflächenkomponente F_{B2} und F_{B2}. Laufflächenkomponente und Aufnahme werden erfindungsgemäss so dimensioniert und miteinander verbunden, dass die Eigenresonanzen der Laufflächenkomponente ausserhalb des Motorbetriebsfensters liegen, d.h. sich mit diesem nicht überschneiden. Ergänzend oder alternativ können Laufflächenkomponente und Aufnahme mit diskreten Kontaktstellen verbunden sind, wobei deren Anzahl ungleich der Zahl der Biegemodes der Laufflächenkomponente im Motorbetriebsfenster ist. Diese Verbindung mittels diskreter Kontaktstellen kann sowohl mittels Klebemittel als auch ohne, z.B. durch Klemmverbindungen, bewirkt werden.

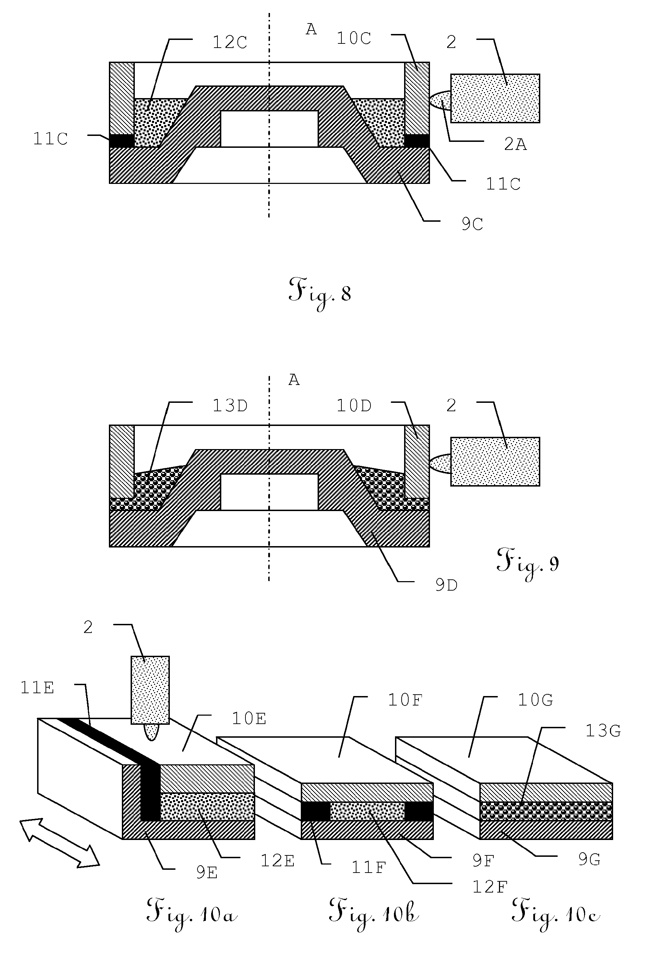

Eine erste Ausführungsform des erfindungsgemässen Piezo-Antriebs zur Erzeugung von Drehbewegungen wird in Fig.8 schematisch dargestellt. Der Piezo-Antrieb weist wenigstens piezoelektrisches Motorelement 2 mit einer Vorschubkomponente 2A, eine Laufflächenkomponente 10c zur Kontaktierung durch die Vorschubkomponente 2A und eine Aufnahme 9C für die Laufflächenkomponente 10C zur Verbindung mit einer anzutreibenden Komponente auf. Die Laufflächenkomponente 10C ist als Keramikring mit gekrümmter Lauffläche ausgebildet, insbesondere aus Al₂O₃, und zwischen Laufflächenkomponente und Aufnahme sind eine Klebmittelschicht 11C und eine Dämpfungslage 12C zur Dämpfung von Schwingungen der Laufflächenkomponente 10C angeordnet, wobei der Keramikring an seiner Stirnseite mit der Aufnahme 9C verklebt und die Dämpfungslage 12C an der Innenseite des Keramikrings angeordnet sind. Dies hat den Vorteil, dass der Keramikring beim Zusammenfügen auf dem Klebemittel schwimmt und so der Rundlauf leicht justiert werden kann.

Das piezoelektrische Motorelement weist ein von Temperatur und der Ansteuerung abhängiges Motorbetriebsfenster als Frequenzbereich der Bewegung der Vorschubkomponente auf, wobei Laufflächenkomponente 10C und Aufnahme 9C so dimensioniert und miteinander verbunden sind, dass die Eigenresonanzen der Laufflächenkomponente 10C für die üblichen Betriebstemperaturen, z.B. zwischen -40° Celsius und +50° Celsius, ausserhalb des Motorbetriebsfensters liegen. Klebemittelschicht 11C und/oder Dämpfungslage 12C sollten ein viskoelastisches Verformungsverhalten und eine Shore-A-Härte zwischen 25 und 35, insbesondere von 30, aufweisen. Als geeignete Dämpfungs- oder Klebemittel können teilkristalline Polymere, z.B. Polyarylamid, insbesondere mit Faserverstärkung, 2-Komponenten Polysulfid oder Epoxidharz Verwendung finden.

Dabei können beide Schichten Füllstoffe aufweisen, insbesondere mineralische Partikel, Glas-, Kunststoff- und/oder Keramikperlen. Diese Füllstoffe können je nach Dimensionierung und Material die innere Reibung und damit die Dissipation erhöhen.

Für den Einsatz in geodätischen Geräten kann der Keramikring einen Durchmesser zwischen 40 und 150 mm, eine Laufflächenbreite zwischen 1,5 und 10 mm und die Klebmittelschicht eine Dicke zwischen 0,05 und 0,2 mm aufweisen, wobei Eigenmoden im hörbaren Bereich zwischen 1 kHz und 15 kHz, insbesondere zwischen 6 und 8 kHz, vermieden werden.

Eine weitere erfindungsgemässe Möglichkeit zur Verringerung oder Vermeidung resonanter Effekte besteht darin, die Laufflächenkomponente als asymmetrische Komponente bzw. als asymmetrischen Ring oder mit einer mehrteiligen, d.h. unterbrochenen Lauffläche auszubilden.

Fig.9 zeigt die schematische Darstellung einer zweiten Ausführungsform des erfindungsgemässen Piezo-Antriebs für Drehbewegungen. Der Aufbau mit Keramikring als Laufflächenkomponente 10D und Aufnahme 9D entspricht der in Fig.8 dargestellten ersten Ausführungsform. Jedoch werden keine separaten und unterschiedlich ausgelegten Schichten für Verklebung und Dämpfung verwendet. Beide Effekte werden nunmehr durch eine einzige Zwischenlage als Klebemittelschicht 13D bewirkt, die zudem die Eigenschaften der Dämpfungslage mitumfasst, was bspw. durch die Verwendung von Füllstoffen realisiert werden kann. In diesem Beispiel erfolgt der verklebende Kontakt zwischen Laufflächenkomponente 10D und Aufnahme 9D sowohl stirnseitig als auch an der Innenseite des Keramikringes.

Eine Antriebsgestaltung zur Erzeugung einer Linearbewegung oder einer axial kontaktierten Rotationsbewegung, wie z.B. in Fig.2b dargestellt, wird in Fig.10a-c anhand einer dritten, vierten und fünften Ausführungsform des erfindungsgemässen Piezo-Antriebs erläutert.

Fig.10a zeigt eine längliche Laufflächenkomponente 10E, die an ihrer Schmalseite über eine Klebemittelschicht 11E mit einem Schenkel der gewinkelt ausgeführten Aufnahme 9E verbunden ist. Auf der breiten Fläche der Laufflächenkomponente ist eine Dämpfungslage 13E mit adhäsivem Charakter angeordnet, so dass auch an dieser Seite eine flächige Verbindung mit der Aufnahme erfolgt. Durch die gewinkelte Auslegung und die ebenfalls fixierende Wirkung der Dämpfungslage 13E kann die Laufflächenkomponente 10E an beiden Längsachsen ausgerichtet und definiert befestigt werden.

Bei der in Fig.10b dargestellten vierte Ausführungsform des erfindungsgemässen Piezo-Antriebs erfolgt eine Verbindung von Laufflächenkomponente 10F und Aufnahme 9F durch Klebemittelschichten 11F in Form von zwei Streifen zwischen denen die Dämpfungslage 13F eingebracht ist. Wird die als Dämpfungslage 13F wirkende Zwischenlage mit einer die Dicke der Klebemittelschicht 11F im verklebten Zustand übersteigenden Schichtdicke ausgebildet, so kann auch eine Vorkompression bzw. Vorspannung der Dämpfungslage 13F erfolgen.

Ein zur zweiten Ausführungsform in Fig.9 ähnlicher Ansatz mit einer einheitlichen Schicht wird als fünfte Ausführungsform für den Fall einer Linearbewegung in Fig.10c dargestellt. Auch hier werden klebende und dämpfende Funktionalität in eine einheitliche Klebemittelschicht 13G integriert, die zwischen Laufflächenkomponente 10G und Aufnahme 9G vollflächig kontaktierend angeordnet ist. Der resultierende Aufbau besitzt somit einen einfachen Sandwich-Charakter.

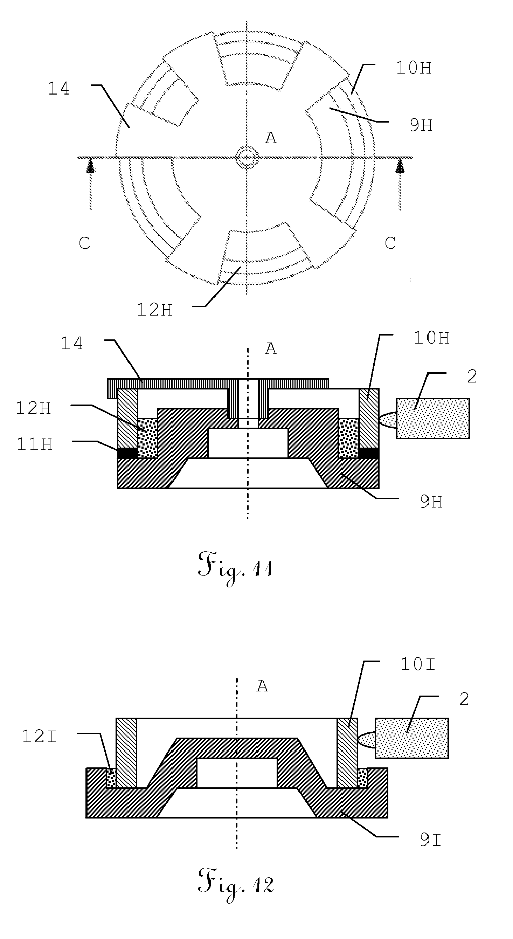

Fig.11 zeigt eine sechste Ausführungsform des erfindungsgemässen Piezo-Antriebs für Drehbewegungen mit einer Klemmverbindung in schematischer Darstellung, wobei die obere Darstellung einer Draufsicht und die untere Darstellung einem Schnitt entlang der Linie CC entsprechen. Auch hier ist die Laufflächenkomponente 10H ringförmig ausgebildet, wobei deren Verbindung mit der Aufnahme 9H durch eine Verklemmung in axialer Richtung erfolgt. Hierzu wird ein Klemmelement 14 als Halterung verwendet, welches die Laufflächenkomponente 10H gegen eine weiche Elastomerschicht als Zwischenlage presst, die wiederum auf der Aufnahme 9H angebracht ist. Zudem ist als Dämpfungslage 12H eine weitere Zwischenlage zwischen Aufnahme 9H und Laufflächenelement 10H angeordnet. Als Material des Klemmelementes 14 kann z.B. Kunststoff oder Metall verwendet werden, wobei eine kriechfeste Federwirkung vorteilhaft ist, so dass eine federnde Verspannung resultiert. Die durch das Klemmelement 14 erzeugte Anpresskraft sollte hierbei auch über den unter Betriebsbedingungen zu erwartenden Temperatur- und Feuchtigkeitsbereich hinreichend konstant bleiben. Durch das Klemmelement 14 wird zudem bei der Montage eine zentrierende Wirkung auf die Laufflächenkomponente 10H ausgeübt.

Zur Unterdrückung bzw. Verhinderung des Ausbildens resonanter Effekte wird das Klemmelement 14 in diesem Beispiel mit asymmetrischer Geometrie und einer diskreten Zahl von Kontaktflächen ausgebildet.

Fig.12 zeigt die schematische Darstellung einer siebten Ausführungsform des erfindungsgemässen Piezo-Antriebs für Drehbewegungen, bei der die Laufflächenkomponente 10I ringförmig, d.h. als Keramikring, ausgebildet ist und durch eine in radialer Richtung wirkende Schrumpfverbindung mit der Aufnahme 91 verbunden ist. Hierzu wird eine Zwischenlage als Dämpfungslage 12I zwischen Laufflächenkomponente 10I und Aufnahme 91 eingebracht, z.B. durch Umspritzen oder Vulkanisieren der Aufnahme 91 vor dem Aufschrumpfvorgang. Diese Zwischenlage ist dabei min. einige Mikrometer dick und aus kriechfesten Material, z.B. Kunststoff oder Elastomer, gefertigt. Das Zusammenspiel von Aufnahme 91 und Dämpfungslage 12I erlaubt es auch, Unrundheiten der Laufflächenkomponente des Keramikringes elastisch aufzunehmen und zu kompensieren. Der Aufschrumpfprozess beinhaltet eine Erhitzung der Aufnahme 91 mit nachfolgendem Einlegen der Laufflächenkomponente 10I und Abkühlen. Der Grundwerkstoff der Aufnahme 91 sollte einen ähnlichen Ausdehnungskoeffizient wie der Keramikring besitzen.

Bei dieser Ausführungsform kann die Aufnahme 91 sowohl in der dargestellten Form als Scheibe und damit symmetrisch, als auch alternativ in zu Fig.11 analoger Weise mit asymmetrischer Geometrie ausgebildet sein.

Es versteht sich für den Fachmann, dass die verschiedenen Komponenten je nach Anwendungszweck und zu bewirkender Bewegung unterschiedliche Geometrien und dadurch auch abweichende Verbindungscharakteristiken aufweisen können. Zudem können zur Realisierung der Laufflächen neben Hartmetallen und Keramiken auch andere für den jeweiligen Anwendungsbereich geeignete Materialien eingesetzt werden. Die Klebeverbindungen bzw. Dämpfungslagen werden allgemein als durchgängig und flächig dargestellt. Erfindungsgemäss können jedoch auch unterbrochene Verbindungen realisiert werden, z.B. durch die Ausbildung isolierter Stege oder die Einbringung von Aussparungen in ansonsten homogenen und durchgehenden Schichten.

## Patentansprüche

1. Piezo-Antrieb, insbesondere zur Verwendung in geodätischen oder Koordinatenmessgeräten mit
- wenigstens einem eine Vorschubkomponente (2a) aufweisenden piezoelektrischen Motorelement (2),
- einer Laufflächenkomponente (1,1',10,10C-I), insbesondere aus Keramik, zur Kontaktierung durch die Vorschubkomponente (2a),
- einer Aufnahme für die Laufflächenkomponente (1,1',10,10C-I) zur Verbindung mit einer anzutreibenden Komponente,
wobei das piezoelektrische Motorelement (2) ein Motorbetriebsfenster (F_{M}) als Frequenzbereich der Bewegung der Vorschubkomponente (2a) aufweist,
**dadurch gekennzeichnet, dass**
Laufflächenkomponente (1,1',10,10C-I) und Aufnahme (9,9C-I) so dimensioniert und miteinander verbunden sind, dass die Eigenresonanzen (F_{B1},F_{B2}) der Laufflächenkomponente (1,1',10,10C-I) ausserhalb des Motorbetriebsfensters (F_{M}) liegen, insbesondere über einen Temperaturbereich von -20 bis +60°C.

2. Piezo-Antrieb nach Anspruch 1,
**dadurch gekennzeichnet, dass**
die Laufflächenkomponente (10I) ringförmig ausgebildet ist und durch eine in radialer Richtung wirkende Schrumpfverbindung mit der Aufnahme (9I) verbunden ist.

3. Piezo-Antrieb nach Anspruch 1 oder 2,
**dadurch gekennzeichnet, dass**
die Laufflächenkomponente (10H) ringförmig ausgebildet ist und in axialer Richtung auf die Aufnahme (9H) geklemmt oder mit dieser federnd verspannt ist.

4. Piezo-Antrieb nach einem der vorangehenden Ansprüche,
**gekennzeichnet durch**
wenigstens eine Zwischenlage, insbesondere mit viskoelastischem Verformungsverhalten, zwischen Laufflächenkomponente (1,1',10,10C-I) und Aufnahme (9,9C-I).

5. Piezo-Antrieb nach Anspruch 4,
**dadurch gekennzeichnet, dass**
die Zwischenlage eine Shore-A-Härte zwischen 20 und 50, insbesondere von 30 aufweist.

6. Piezo-Antrieb nach einem der Ansprüche 4 oder 5,
**dadurch gekennzeichnet, dass**
die Zwischenlage Füllstoffe aufweist, insbesondere mineralische Partikel, Glas-, Kunststoff- und/oder Keramikperlen.

7. Piezo-Antrieb nach einem der Ansprüche 4 bis 6,
**dadurch gekennzeichnet, dass**
die Zwischenlage aus
- 2-Komponenten-Polysulfid,
- Epoxidharz oder
- einem teilkristallinen Polymer, z.B. aus Polyarylamid, insbesondere mit Faserverstärkung, ausgebildet ist.

8. Piezo-Antrieb nach einem der Ansprüche 4 bis 7,
**dadurch gekennzeichnet, dass**
die Zwischenlage als Klebemittelschicht (11,11C,11E-F,13D,13G) zur Verbindung von Laufflächenkomponente (1,1',10,10C-G) und Aufnahme (9,9C-G) ausgebildet ist.

9. Piezo-Antrieb nach einem der Ansprüche 4 bis 8,
**dadurch gekennzeichnet, dass**
die Zwischenlage als Dämpfungslage (12,12C,12E-I) zwischen Laufflächenkomponente (1,1',10,10C-I) und Aufnahme (9,9C-I) ausgebildet ist, sodass Schwingungen der Laufflächenkomponente(1,1',10,10C-I) gedämpft werden.

10. Piezo-Antrieb nach einem der vorangehenden Ansprüche 4 bis 9,
**dadurch gekennzeichnet, dass**
die Laufflächenkomponente (1,1',10,10C-D,10H-I) eine gekrümmte Lauffläche aufweist, insbesondere als ringförmige Laufflächenkomponente (1,1',10,10C-D) ausgebildet ist.

11. Piezo-Antrieb nach Anspruch 10,
**dadurch gekennzeichnet, dass**
die Laufflächenkomponente (1,1',10,10C-D) als Keramikring ausgebildet ist, insbesondere aus Al₂O₃, und zwischen Laufflächenkomponente (1,1',10,10C-D) und Aufnahme (9,9C-D) die Zwischenlage als Dämpfungslage (12,12C) und eine weitere Zwischenlage als Klebemittelschicht (11,11C,13D) angeordnet sind, wobei der Keramikring an seiner Stirnseite mit der Aufnahme (9,9C-D) verklebt ist und die Dämpfungslage (12,12C) an der Innenseite des Keramikrings angeordnet ist.

12. Piezo-Antrieb nach Anspruch 11,
**dadurch gekennzeichnet, dass**
der Keramikring einen Durchmesser zwischen 40 und 150 mm, eine Laufflächenbreite zwischen 1,5 und 10 mm und die Klebemittelschicht (11,11C,13D) eine Dicke zwischen 0,05 und 0,3 mm aufweist.

13. Piezo-Antrieb nach einem der vorangehenden Ansprüche,
**dadurch gekennzeichnet, dass**
Laufflächenkomponente (1,1',10,10C-I) und Aufnahme (9,9C-I) mit diskreten Kontaktstellen verbunden sind, wobei deren Anzahl ungleich der Zahl von Biegemodes der Laufflächenkomponente (1,1',10,10C-I) im Motorbetriebsfenster (F_{M}) ist.

14. Piezo-Antrieb nach einem der vorangehenden Ansprüche,
**dadurch gekennzeichnet, dass**
die Laufflächenkomponente (1,1',10,10C-I) als asymmetrischer Ring oder mit einer mehrteiligen, unterbrochenen Lauffläche ausgebildet ist oder durch eine Aufnahme (9,9C-I) oder Halterung (14) mit asymmetrischer Geometrie fixiert wird.

15. Piezo-Antrieb nach einem der vorangehenden Ansprüche,
**dadurch gekennzeichnet, dass**
die Laufflächenkomponente (1,1',10,10C-I) keine Eigenresonanzen (F_{B1},F_{B2}) im hörbaren Frequenzbereich zwischen 1 und 15 kHz, insbesondere nicht zwischen 6 und 8 kHz aufweist.
